(19) Europäisches Patentamt
European Patent Office
Office européen des brevets

(11) Veröffentlichungsnummer: **0 468 302 A2**

(12) **EUROPÄISCHE PATENTANMELDUNG**

(21) Anmeldenummer: **91111596.2**

(22) Anmeldetag: **12.07.91**

(51) Int. Cl.⁵: **G01B 9/02**, G01B 11/02

(30) Priorität: **16.07.90 DE 4022601**

(43) Veröffentlichungstag der Anmeldung:
**29.01.92 Patentblatt  92/05**

(84) Benannte Vertragsstaaten:
**CH FR GB IT LI SE**

(71) Anmelder: **Hommelwerke GmbH**
**Alte Tuttlinger Strasse 20**
**W-7730 VS-Schwenningen(DE)**

(72) Erfinder: **Wehrle, Klaus**
**Römerstrasse 11**
**W-7734 Brigachtal(DE)**
Erfinder: **Jakober, Bernd**
**Im Brotkörble 33**
**W-7730 VS-Mühlhausen(DE)**

(74) Vertreter: **Leine, Sigurd, Dipl.-Ing. et al**
**LEINE & KÖNIG Patentanwälte**
**Burckhardtstrasse 1**
**W-3000 Hannover 1(DE)**

(54) **Einrichtung zur optischen Messung von Längen.**

(57) Einrichtung zur optischen Messung von Längen zwischen einem Sensor und einem bewegbaren Meßreflektor, wobei der Sensor aufweist einen Licht übertragenden Körper, an dem an zwei gegenüberliegenden Flächen teildurchlässige Spiegel angeordnet sind, einen Laser, der hinter dem einen teildurchlässigen Spiegel des Licht übertragenden Körpers angeordnet ist und Licht durch den teildurchlässigen Spiegel in den Licht übertragenden Körper wirft, und einen ersten Fotodetektor, der aus dem Licht übertragenden Körper austretendes Licht auffängt und in ein entsprechendes elektrisches Signal umwandelt, wobei der bewegbare Meßreflektor auf der dem Laser abgewandten Seite angeordnet ist und dort austretendes Licht auffängt und in den Licht übertragenden Körper zurückreflektiert, und wobei der Abstand zwischen den teildurchlässigen Spiegeln so bemessen ist, daß zwischen ihnen eine stehende Welle gebildet ist. Der Licht übertragende Körper ist eine Kugellinse, dessen äußere Fläche an zwei diametral gegenüberliegenden Stellen die halbdurchlässigen Spiegel bildet. Der erste Fotodetektor ist neben der Kugellinse angeordnet ist und fängt in einem Winkel zu der optischen Achse aus der Kugellinse austretendes Licht auf. Die Einrichtung ist besonders einfach im Aufbau und ermöglicht in einer Weiterbildung unmittelbar die optische Erzeugung zweier um 90° zueinander verschobener Spannungen, die in Abhängigkeit von Bewegungen des Meßreflektors wechseln und unmittelbar die Speisung eines Vorwärts-/Rückwärts-Zählers ermöglichen. Es ist also nicht nur die Bewegung des Meßreflektors zum Zwecke der relativen Längenmessung, sondern auch die Richtung der Bewegung zum Zwecke der absoluten Längenmessung feststellbar.

FIG. 1

Die Erfindung betrifft eine Einrichtung der im Oberbegriff des Anspruchs 1 genannten Art zur optischen Messung von Längen zwischen einem Sensor und einem bewegbaren Meßreflektor.

Durch die DE-OS 36 12 221 ist eine Einrichtung der betreffenden Art bekannt, die aus einer monochromatischen Laser-Strahlungsquelle, optisch doppelbrechenden und reflektierenden Bauelementen und einem Abtast-Etalon besteht, der einen Licht übertragenden Körper darstellt und an seinen parallelen Endflächen mit teilweise transparenten und fotoelektrisch aktiven Schichten versehen ist. Die Endflächen bilden also teildurchlässige Spiegel und gleichzeitig Fotodioden. Der Abstand zwischen den Endflächen des Abtast-Etalons ist im Verhältnis zu der Wellenlänge der Laser-Strahlungsquelle so bemessen, daß eine stehende Welle entsteht. Von dem Meßreflektor reflektiertes Licht überlagert sich mit der in dem Abtast-Etalon stehenden Welle, und die Summe dieser beiden Wellen bzw. deren Differenz wird durch die fotoelektrisch aktiven Schichten abgetastet. Bei Änderung des Abstandes des Meßreflektors ändert sich das Licht an den fotoelektrisch aktiven Schichten und damit die von diesen abgegebene elektrische Spannung, die dann ein Maß für die Längenänderung zwischen Sensor und Meßreflektor ist.

Diese bekannte Einrichtung ist wegen der Anordnung

Grundgedanke der Erfindung ist es, die zur Erzeugung der stehenden Welle erforderlichen spiegelnden Flächen nicht mehr als parallele Planflächen auszubilden, sondern als Außenflächen einer Kugellinse, die sich sehr einfach und genau herstellen läßt. Die Verwendung einer Kugellinse führt aber gleichzeitig zu dem großen Vorteil, daß das interferente Licht zwischen stehender Welle und von dem Meßreflektor zurückkommender Welle nicht mehr an den Endflächen der Interferenzstrecke und damit auch im Strahlengang des von dem Meßreflektor zurückkommenden Lichts abgetastet werden muß, vielmehr an grundsätzlich beliebiger Stelle an der Oberfläche der Kugellinse oder in deren Nähe abgetastet werden kann. Durch Überlagerung der stehenden Welle und der von dem Meßreflektor zurückkommenden Welle entsteht nämlich durch mehrfache Reflexion an der Grenzfläche Glas - Luft der Kugellinse auf deren Oberfläche ein Interferenzmuster, das sich bei einer Bewegung des Meßreflektors in einer Diametralebene, zu der das von dem Laser durch die Kugellinse laufende Licht parallel verläuft, entlang der Oberfläche der Kugellinse bewegt. Erfindungsgemäß ist an der Oberfläche der Kugellinse bzw. in deren Nähe der Fotodetektor angeordnet, so daß dieser bei Durchlaufen des Interferenzmusters bei Änderungen des Abstandes des Meßreflektors eine wechselnde Spannung abgibt, deren Wechselzahl ein Maß für die von dem bewegbaren Meßreflektor durchlaufenen Strecke ist.

Der Abstand der Dunkelstellen entlang der Oberfläche der Kugellinse steht dabei nicht in einer unmittelbaren Beziehung zur Wellenlänge des Lichts des Lasers und ist auch nicht entlang der Oberfläche der Kugellinse konstant.

Die Verwendung der Kugellinse hat außerdem den häufig ausnutzbaren Vorteil, daß sie das Licht des Lasers fokussiert. Dabei sind jedoch nur Meßwege im Bereich von einigen Millimetern realisierbar, bedingt durch die Fokuslage des Meßstrahls von der Kugellinse zu dem Meßreflektor. Eine Weiterbildung der Erfindung sieht daher zwischen Kugellinse und Meßreflektor eine Sammellinse vor, die so bemessen der fotoelektrisch aktiven Schichten auf dem teildurchlässigen Spiegel verhältnismäßig aufwendig. Außerdem ist die Einrichtung in dem oben beschriebenen Umfang nicht in der Lage, die Richtung von Änderungen des Abstandes zwischen Sensor und Meßreflektor festzustellen.

Durch IEEE Journal of Quantum Electronics, Vol. QE-18, Nr. 10, Oktober 1982, S. 1647-1652, ist es bekannt, bei einem Interferometer zwei um 90° phasenverschobene und von dem Meßwert abhängende Wechselspannungen zu bilden, um eine Vorwärts-/Rückwärts-Zählung der Helligkeitsänderungen zu ermöglichen, die sich bei Änderungen des Meßwertes ergeben. Zu diesem Zweck wird die Stromquelle eines Diodenlasers mit einer Frequenz moduliert. Dadurch ändert sich auch das Licht an der Ausgangsfotodiode des Interferometers mit der Modulationsfrequenz. Die Ausgangswechselspannung der Fotodiode wird einmal mit der Modulationsfrequenz und einmal mit der doppelten Modulationsfrequenz phasenabhängig demoduliert. Auf diese Weise entstehen zwei um 90° voneinander versetzte Ausgangsspannungen, die eine Vorwärts-/Rückwärts-Zählung einer Frequenz ermöglichen, die von den Lichtwegänderungen innerhalb oder außerhalb des Interferometers abhängt. Die Modulationsfrequenz wirkt somit als Trägerfrequenz für die Meßfrequenz. Die Verwendung eines Interferometers stellt jedoch einen beträchtlichen Aufwand dar, da relativ komplizierte Bauteile wie Koppelstellen von Lichtleitern, Strahlteiler und Strahlvereiniger, Phasenschieber, Modulatoren usw. notwendig sind. Wegen der vielen optischen Teile ist die Verkleinerung solcher Interferometer begrenzt.

Der Erfindung liegt die Aufgabe zugrunde, eine Einrichtung zur optischen Messung von Längen zwischen einem Sensor und einem bewegbaren Meßreflektor zu schaffen, die sehr einfach im Aufbau ist und sich sehr klein herstellen läßt.

Die der Erfindung zugrundeliegende Aufgabe wird durch die im Kennzeichen des Anspruchs 1 angegebene Lehre gelöst. ist, daß das Licht parallel zur optischen Achse 8 in Richtung Meßreflektor verläuft. Auf diese Weise ist die Einrichtung für die Messung wesentlich größerer Wege der Bewegung des Meßreflektors geeignet. Die Sammellinse liegt natürlich auf der der Kugellinse abgewandten Seite des Fokus der Kugellinse.

Wird als Meßreflektor ein Planspiegel verwendet, so muß seine Winkellage exakt eingestellt und eingehalten werden, damit das gewünschte, auf der Oberfläche der Kugel wandernde Lichtmuster entsteht. Um diese Bedingungen zu vereinfachen, ist es gemäß einer Weiterbildung der Erfindung zweckmäßig, auf der dem Laser abgewandten Seite der Kugellinse eine Monomode-Lichtfaser anzuordnen, deren der Kugellinse zugewandtes Licht im Brennpunkt der Kugellinse liegt, wobei an dem der Kugellinse abgewandten Ende der Monomode-Lichtfaser eine Gradienten-Index-Linse angeordnet ist, die das aus der Lichtfaser kommende Licht in paralleles Licht verwandelt, das auf den als retroreflektierende Kugel ausgebildeten Meßreflektor fällt. Bei der retroreflektierenden Kugel ist eine Einhaltung besonderer Ausrichtbedingungen nicht erforderlich. Die Gradienten-Index-Linse ist eine Linse, deren Material einen radialen Gradientenindex hat. Solche Linsen sind bekannt, beispielsweise durch das Buch "Optics Guide", 1988, von Melles Griot, 18-48, 1770 Kettering Street, Irvine, California 92714, United States of America. Bei mit stehenden Wellen arbeitenden Sensoren ist es nicht ohne weiteres möglich, die Richtung der Bewegung des Meßreflektors festzustellen. Bei der erfindungsgemäßen Einrichtung können jedoch auch die Maßnahmen angewendet werden, die in der eingangs diskutierten Literaturstelle "IEEE Journal of Quantum Electronics" beschrieben sind. Es ist also ohne weiteres möglich, den als Halbleiter-Laser ausgebildeten Laser durch Modulation seiner Stromversorgung zu modulieren und durch die bekannten Maßnahmen 90$^\circ$ zueinander versetzte Ausgangsspannungen zu bilden, die eine Vorwärts-/Rückwärts- Zählung einer Frequenz ermöglichen, die von den Lichtwegänderungen zum Meßreflektor hin abhängen. Die erfindungsgemäße Einrichtung ermöglicht wegen der Verwendung der Kugellinse eine außerordentlich einfache Bildung von 90$^\circ$ zueinander versetzten Spannungen, die eine Vorwärts-/Rückwärts-Zählung ermöglichen. Das auf der Oberfläche der Kugellinse erscheinende Interferenzmuster bewegt sich nämlich entlang der Oberfläche der Kugellinse in Abhängigkeit von den Bewegungen des Meßreflektors, und zwar in unterschiedliche Richtungen in Abhängigkeit von der Richtung der Bewegung des Meßreflektors. Durch Anordnung eines zweiten Fotodetektors in Bewegungsrichtung des Interferenzmusters vor oder hinter dem zweiten Detektor lassen sich bei entsprechendem Abstand der Fotodetektoren zueinander durch die Fotodetektoren zwei Spannungen erzeugen, die sich wie sin und cos zueinander verhalten. Außer der Verwendung eines zweiten Fotodetektors und deren genauen Anordnung sind also keine weiteren Maßnahmen erforderlich, um die sin/cos-Spannungen zu erzeugen. Dies stellt eine beträchtliche Vereinfachung gegenüber der bekannten Anordnung dar.

Damit sich die Ausgangsspannungen der beiden Fotodetektoren genau wie sin und cos zueinander verhalten, kommt es auf eine genaue Lage der Fotodetektoren zueinander und im Verhältnis zu dem Interferenzmuster an. Nach der Lehre des Anspruchs 5 ist der Abstand zwischen erstem und zweitem Fotodetektor einstellbar, so daß die sin/cos-Lage herstellbar ist. Die 90$^\circ$-Phasenverschiebung zwischen den beiden Ausgangsspannungen der Fotodetektoren läßt sich aber auch mit einem festen Abstand der Fotodetektoren zueinander durch eine Einstellung der Lage der beiden Fotodetektoren entlang dem Umfang der Kugellinse erzielen. Dies deshalb, weil sich das Interferenzmuster entlang der Oberfläche der Kugellinse dehnt bzw. zusammenzieht, so daß bei Verschiebung der beiden fest zueinander angeordneten Fotodetektoren der Ort einstellbar ist, wo die 90$^\circ$-Phasenbeziehung besteht.

Die beiden Fotodetektoren können wieder in an sich bekannter Weise an einen Vorwärts-/Rückwärts-Zähler angeschlossen sein, um so eine richtungsabhängige Bestimmung der Bewegung des Meßreflektors zu erzielen.

Anhand der Zeichnung soll die Erfindung nachfolgend näher erläutert werden.

Fig. 1    zeigt ein erstes Ausführungsbeispiel der Erfindung.

Fig. 2    bis 4 dienen zur Erläuterung der Funktionsweise der Einrichtung nach Fig. 1.

Fig. 5    entspricht den Fig. 2 bis 4 und verdeutlicht die Einstellung der beiden Fotodetektoren und

Fig. 6    zeigt ein zweites Ausführungsbeispiel der Erfindung.

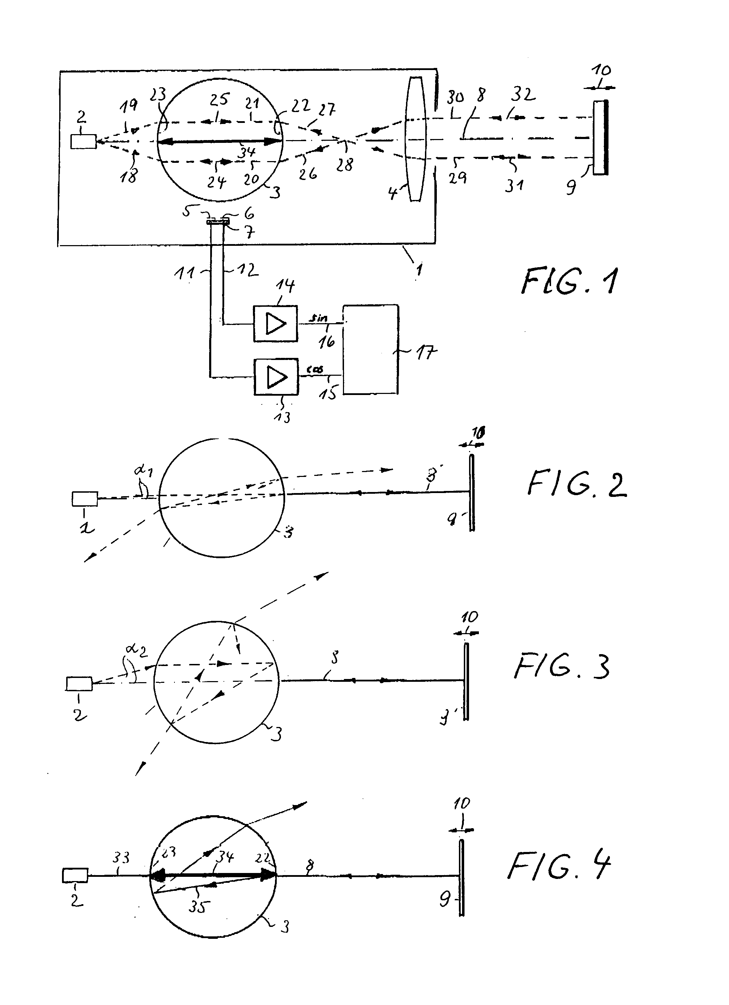

Fig. 1 zeigt schematisch einen Sensor 1, an oder auf dem eine Laserdiode 2, eine Kugellinse 3 und eine Sammellinse 4 sowie zwei Fotodetektoren 5 und 6 angeordnet sind, die an einer gemeinsamen Platte 7 befestigt sind.

Entlang einer optischen Achse 8 ist im Abstand zu dem Sensor 1 ein Meßreflektor 9 in Form eines ebenen Spiegels angeordnet. Dieser Spiegel kann an einem nicht dargestellten Gegenstand befestigt sein oder ihn berühren, dessen Abstand in bezug zu dem Sensor 1 gemessen werden soll. Der Meßreflektor 9 ist also in Richtung eines Doppelpfeiles 10 hin- und herbeweglich.

Die elektrischen Ausgänge der Fotodetektoren 5 und 6 sind über Leitungen 11 und 12 mit Verstärkern 13 und 14 verbunden, deren Ausgangsleitungen 15 und 16 mit den beiden Eingängen eines Vorwärts-/Rückwärtszählers 17 verbunden sind.

Das Licht der Laserdiode 2 gelangt in die Kugellinse 3, was durch Strahlen 18, 19 und 33 angedeutet ist. Innerhalb der Kugellinse 3, die einen Brechungsindex von 2 hat, werden die Strahlen 20, 21 und 34 die durch fresnelsche Reflexion an sich gegenüberliegenden, halbdurchlässige Spiegel darstellenden Grenzflächen 22 und 23 zwischen Glas und Luft reflektiert werden, was durch den Doppelpfeil 34 angedeutet ist. Somit ergibt sich zwischen den Grenzflächen 22 und 23 eine stehende Welle.

Durch die Grenzfläche 22 tritt ein Teil des Lichts aus, was durch Strahlen 26, 27 und 8 angedeutet ist, die in einem Fokus 28 zusammenlaufen und dann in die Sammellinse 4 gelangen, wo sie zu Parallelstrahlen 29, 30 und 8 umgeformt werden. Diese gelangen auf die Oberfläche des ebenen Meßreflektors 9 und werden in sich selbst zurückgeworfen, was durch Doppelpfeile 31, 32 und 8 angedeutet ist. Die zurückgeworfenen Strahlen gelangen auf dem gleichen Wege zurück in die Kugellinse 3, wo sie sich mit der stehenden Welle zwischen den Grenzflächen 22 und 23 überlagern.

Wie das nachfolgend anhand der Fig. 2 bis 4 noch erläutert werden wird, entsteht durch die Überlagerung auf der Oberfläche der Kugellinse 3 ein Interferenzmuster, das durch die Fotodioden 5 und 6 abgetastet wird. Die Fotodioden 5 und 6 haben eine solche Lage zueinander, daß sie das Interferenzmuster mit einer Phasenverschiebung von 90° abtasten und somit auch Ausgangssignale abgeben, die sich um einen Phasenwinkel von 90° zueinander unterscheiden, was durch die Angaben sin und cos an den Ausgangsleitungen 15 und 16 angedeutet ist. Aufgrund dieser 90°-Verschiebung ist der Vorwärts-/Rückwärts-Zähler 17 in der Lage, in beide Richtungen zu zählen und somit die Bewegung des Meßreflektors 9 in beide Richtungen des Doppelpfeiles 10 wiederzugeben.

Nachfolgend wird das Entstehen des Interferenzmusters an der Oberfläche der Kugellinse 3 anhand der Fig. 2 bis 4 erläutert.

In Fig. 2 ist ein Strahlengang gezeichnet, bei dem ein Strahl mit einem kleinen Austrittswinkel α zur optischen Achse 8 einen anderen optischen Weg zurücklegt als ein Strahl in Fig. 3, der mit einem Winkel α austritt. Das Ergebnis der Überlagerung dieser Strahlen bzw. Wellen unterschiedlicher Laufwege mit der von dem Meßreflektor 9 reflektierten Welle (Strahlen 29 und 30) führt zu dem genannten Interferenzmuster, das in seiner Phasenlage von dem geometrischen Ort auf der Kugeloberfläche abhängt. Durch Vergleich der Wege der in die Kugellinse 3 eingezeichneten Strahlen in Fig. 2 und 3 läßt sich der Unterschied der Laufwege ohne weiteres erkennen.

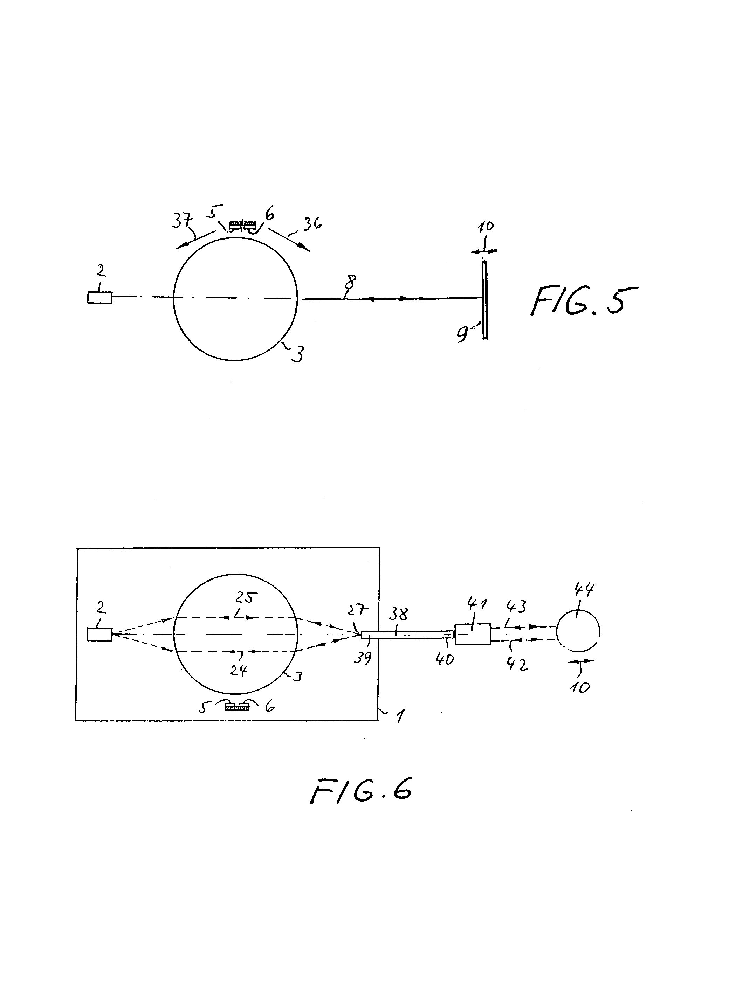

Fig. 4 zeigt den Fall, wo ein Strahl 33 entlang der optischen Achse 8 in die Kugellinse 3 eintritt und durch Reflexion an den Grenzflächen 22 und 23 in sich selbst reflektiert wird, so daß eine stehende Welle erzeugt wird, was durch einen dicken Doppelpfeil 34 verdeutlicht ist. Von diesem Strahl entlang der optischen Achse 8 wird ein Teil nicht in der optischen Achse 8 zurückreflektiert, so daß ein Teilstrahl 35 gebildet ist, der ebenfalls seitlich an der Oberfläche der Kugellinse 3 erscheint und somit zur Bildung des Interferenzmusters beiträgt.

Fig. 5 zeigt im wesentlichen eine Anordnung gemäß den Fig. 2 bis 4 und soll zeigen, daß durch Verschiebung der Fotodioden 5 und 6 entlang der Oberfläche der Kugellinse 3 in Richtung von Pfeilen 36 oder 37 die gewünschte 90°-Verschiebung zwischen den beiden Fotodetektorsignalen 5 und 6 einstellbar ist. Es ist aber auch möglich, daß nur einer der Fotodetektoren, z.B. 5, fest ist, während der andere, z.B. 6, demgegenüber verschiebbar ist, so daß auf diese Weise die 90°-Phasenlage einstellbar ist.

Fig. 6 zeigt ein zweites Ausführungsbeispiel der Erfindung. Gleiche oder sich entsprechende Teile sind mit gleichen Bezugsziffern versehen. Der Unterschied besteht darin, daß die Sammellinse 4 weggelassen und statt dessen eine Monomode-Lichtleitfaser 38 vorgesehen ist, deren eines Ende 39 im Fokus 28 liegt, während am anderen Ende 40 eine Linse 41 angeordnet ist, deren Material einen radialen Gradientenindex hat, so daß aus ihr das Licht als Parallelstrahlen 42 und 43 austritt. Aufgrund dieser Parallelität ist es möglich, statt eines ebenen Spiegels eine retroreflektierende Kugel 44 als Meßreflektor vorzusehen.

**Patentansprüche**

1. Einrichtung zur optischen Messung von Längen zwischen einem Sensor und einem bewegbaren Meßreflektor, wobei der Sensor aufweist einen Licht übertragenden Körper, an dem an zwei gegenüberliegenden Flächen teildurchlässige Spiegel angeordnet sind, einen Laser, der hinter dem einen teildurchlässigen Spiegel des Licht übertragenden Körpers angeordnet ist und Licht durch den teildurchlässigen Spiegel in den Licht übertragenden Körper wirft, und einen ersten Fotodetektor, der aus dem Licht übertragenden Körper austretendes Licht auffängt und in ein entsprechendes elektrisches Signal umwandelt, wobei der bewegbare Meßreflektor auf der dem Laser abgewandten Seite angeordnet ist und dort austretendes Licht auffängt und in den Licht übertragenden Körper zurückreflektiert, und wobei der Abstand zwischen den teildurchlässigen Spiegeln so bemessen ist, daß zwischen ihnen eine stehende Welle gebildet ist, **dadurch gekennzeichnet,** daß der Licht übertragende Körper eine Kugellinse (3) ist, deren äußere Fläche an zwei diametral gegenüberliegenden Stellen die teildurchlässigen Spiegel bildet, und daß der erste Fotodetektor (5) neben der Kugellinse (3) angeordnet ist und in einem Winkel zu der optischen Achse (8) aus der Kugellinse (3) austretendes Licht auffängt.

2. Einrichtung nach Anspruch 1 **dadurch gekennzeichnet,** daß zwischen Kugellinse (3) und Meßreflektor (9) auf der der Kugellinse (3) abgewandten Seite des Fokus (28) der Kugellinse (3) eine Sammellinse (4) angeordnet ist, die so bemessen ist, daß das Licht zu dem Meßreflektor (9) parallel ist.

3. Einrichtung nach Anspruch 1 **dadurch gekennzeichnet,** daß auf der dem Laser (2) abgewandten Seite der Kugellinse (3) eine Monomode-Lichtfaser (38) angeordnet ist, deren der Kugellinse (3) zugewandtes Ende (39) im Fokus (28) der Kugellinse (3) liegt, und daß an dem der Kugellinse (3) abgewandten Ende (40) der Monomode-Lichtfaser (38) eine Gradienten-Index-Linse (41) oder eine Sammellinse (4) angeordnet ist, die das aus der Lichtfaser (38) kommende Licht in paralleles Licht verwandelt, das auf den als retroreflektierende Kugel (44) ausgebildeten Meßreflektor fällt.

4. Einrichtung nach Anspruch 1 **dadurch gekennzeichnet,** daß in einer Diametralebene, zu der das von dem Laser (2) durch die Kugellinse (3) laufende Licht parallel verläuft, neben dem ersten Fotodetektor (5) ein zweiter Fotodetektor (6) in einem solchen Abstand angeordnet ist, daß sich bei Änderungen des Abstandes zwischen Sensor (1) und Meßreflektor (9, 44) die Ausgangsspannungen der beiden Fotodetektoren (5, 6) wie sin und cos zueinander verhalten.

5. Einrichtung nach Anspruch 4 **dadurch gekennzeichnet,** daß der Abstand zwischen erstem Fotodetektor (5) und zweitem Fotodetektor (6) einstellbar ist.

6. Einrichtung nach Anspruch 4 oder 5 **dadurch gekennzeichnet,** daß die Lage der beiden Fotodetektoren (5, 6) entlang dem Umfang der Kugellinse (3) einstellbar ist.

7. Einrichtung nach Anspruch 4 **dadurch gekennzeichnet,** daß an die beiden Fotodetektoren (5, 6) die beiden Eingänge eines Vorwärts-/Rückwärtszählers (17) angeschlossen sind.

8. Einrichtung nach Anspruch 1, **dadurch gekennzeichnet,** daß die Kugellinse (3) einen Brechungsindex von ungefähr 2, idealerweise gleich 2 hat

FIG. 1

FIG. 2

FIG. 3

FIG. 4

FIG.5

FIG.6